# EUROPÄISCHE PATENTSCHRIFT

(11) **EP 0 581 245 B1**
(45) Veröffentlichungstag und Bekanntmachung des Hinweises auf die Patenterteilung: **23.12.1998**
(21) Anmeldenummer: 93111995.2
(22) Anmeldetag: 27.07.1993
(51) Int. Cl.: C09B 33/153, C09B 63/00

(54) **Wasserunlösliche Azofarbmittel**
Water-insoluble azo colouring agents
Produits colorant azoique insoluble dans l'eau

(30) Priorität: 31.07.1992 DE 4225295
(43) Veröffentlichungstag der Anmeldung: 02.02.1994
(73) Patentinhaber: Clariant GmbH, 65929 Frankfurt am Main (DE)
(72) Erfinder: Jung, Rüdiger, Dr., D-65779 Kelkheim/Taunus (DE); Weide, Joachim, D-65779 Kelkheim/Taunus (DE); Metz, Hans, Joachim, Dr., D-64285 Darmstadt (DE)

(56) Entgegenhaltungen:
- EP-A- 0 183 151
- EP-A- 0 260 563
- DE-A- 2 125 193
- FR-A- 2 401 197

## Beschreibung

Die vorliegende Erfindung betrifft das technische Gebiet der Azofarbmittel mit zwei Azogruppen.

Disazopigmente sowie Verfahren zu ihrer Herstellung sind beispielsweise in DE-A-15 44 453 (GB-A-10 66 769), EP-A-25164 (CA-A-11 35 688) und US-PS 3 513 154 beschrieben.

Die EP-A-0 183 151 und US-A-4 234 480 offenbaren wasserlösliche sulfogruppenhaltige Azofarbstoffe auf Basis von 1,4-Bis(acetoacetylamino)-benzol-sulfonsäure und 2-(Aminophenyl)-benzthiazol-sulfonsäure. Farbstoffpräparationen, die solche Farbstoffe enthalten, sind in der EP-A-0 260 563 beschrieben.

Der vorliegenden Erfindung lag die Aufgabe zugrunde, neue wasserunlösliche Azofarbmittel mit zwei Azogruppen zur Verfügung zu stellen.

Gegenstand der vorliegenden Erfindung sind Disazoverbindungen der allgemeinen Formel (I), 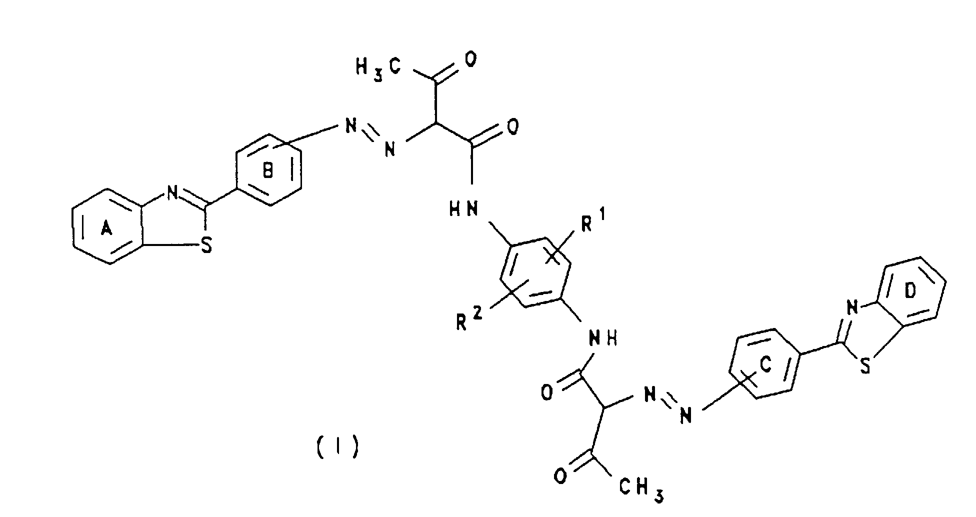 worin R¹ und R² gleich oder verschieden sind und ein Wasserstoff- oder Halogenatom, eine C₁-C₄-Alkyl-, C₁-C₄-Alkoxy-, C₁-C₅-Alkoxycarbonyl-, Nitro-, Cyano- oder Trifluormethylgruppe bedeuten und die Ringe A, B, C und D unabhängig voneinander unsubstituiert sind oder einen oder mehrere, vorzugsweise 1 bis 3, Substituenten aus der Gruppe C₁-C₄-Alkyl, vorzugsweise Methyl oder Ethyl; C₁-C₄-Alkoxy, vorzugsweise Methoxy oder Ethoxy; Carboxy; C₁-C₅-Carbalkoxy, vorzugsweise Carbomethoxy, Carboethoxy, Carbopropoxy, Carboisopropoxy oder Carbobutoxy; C₂-C₅-Alkanoyl, vorzugsweise Acetyl, oder Benzoyl; Acyloxy, vorzugsweise Acetoxy; Acylamino, vorzugsweise Acetylamino oder Benzoylamino; unsubstituiertes oder N-mono- oder N,N-disubstituiertes N,N-disubstituiertes Carbamoyl oder unsubstituiertes oder N-mono- oder Sulfamoyl, wobei als Substituenten C₁-C₄-Alkyl oder ein- bis dreifach substituiertes Phenyl in Betracht kommen; C₁-C₄-Alkylamino oder Phenylamino; C₁-C₄-Alkylsulfonyl oder Phenylsulfonyl; Phenylsulfonylamino; Cyano; Halogen, vorzugsweise Chlor oder Brom; Nitro und Trifluormethyl aufweisen.

Die allgemeine Formel (I) ist als idealisierte Formel zu verstehen und umfaßt auch die entsprechenden tautomeren Verbindungen sowie die möglichen Konfigurationsisomere jeder tautomeren Form. Verbindungen der allgemeinen Formel (I) liegen weitestgehend in der Hydrazonform vor. Die idealisierte Formel (I) umfaßt deshalb vor allem auch die Bishydrazonform.

Von besonderem Interesse sind Verbindungen der allgemeinen Formel (II), 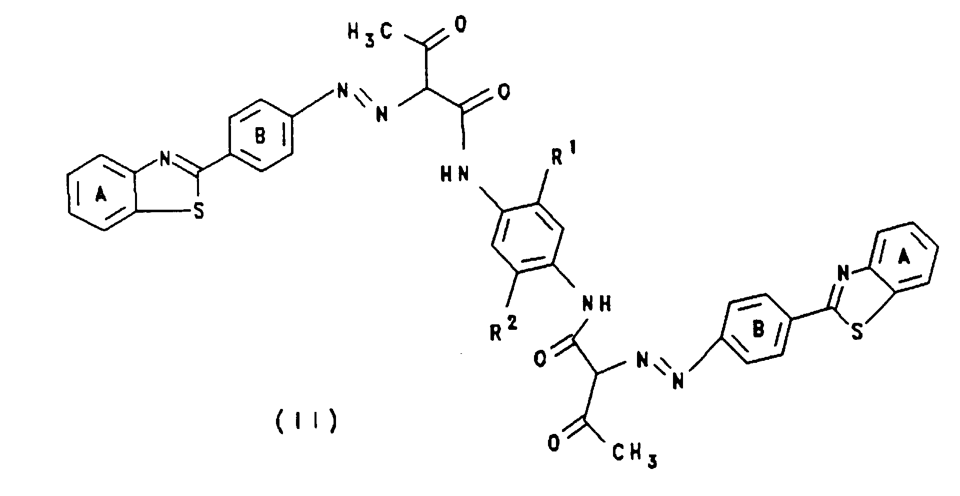 worin R¹ und R² die vorstehend genannten Bedeutungen haben und die Ringe A und B jeweils unabhängig voneinander mit ein bis drei der vorstehend angegebenen Reste substituiert sind.

Von besonderem Interesse sind Verbindungen der Formel (II), worin R¹ und R² gleich oder verschieden sind und die Bedeutung Wasserstoff, Chlor, Brom, Trifluormethyl, Methyl, Ethyl, Methoxy, Ethoxy, Propoxy, Butoxy, Cyano, Nitro, Ethoxycarbonyl oder Methoxycarbonyl haben.

Die der Verbindung der Formel (II) zugrundeliegende Kupplungskomponente ist eine Verbindung der Formel (VI) 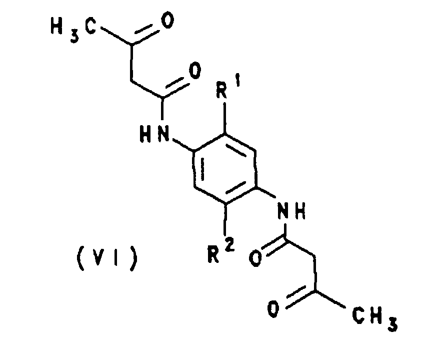 Von besonderem Interesse sind die Verbindungen der Formel (II), worin die der Formel (II) zugrundeliegende Kupplungskomponente der Formel (VI) die Verbindung
1,4-Bis (acetoacetylamino) benzol, 2-Chlor-1,4-Bis(acetoacetylamino)benzol, benzol, 2-Brom-1,4-bis (acetoacetylamino)benzol, 2-Trifluormethyl-1,4-bis (acetoacetylamino)benzol, 2-Methoxycarbonyl-1,4-bis (acetoacetylamino)benzol, 2-Ethoxycarbonyl-1,4-bis(acetoacetylamino)benzol, 2-Cyano-1,4-bis(acetoacetylamino)benzol, 2-Methyl-1,4-bis(acetoacetylamino)benzol, 2-Methoxy-1,4-bis(acetoacetylamino)benzol, 2-Ethoxy-1,4-bis (acetoacetylamino) benzol, 2-Propoxy-1,4-bis(acetoacetylamino)benzol, 2-iso-Propoxy-1,4-bis(acetoacetylamino)benzol, 2-Butoxy-1,4-bis (acetoacetylamino)benzol, 2-Nitro-1,4-bis(acetoacetylamino)benzol, 2,5-Dimethoxy-1,4-bis(acetoacetylamino)benzol, 2,5-Diethoxy-1,4-bis(acetoacetylamino)benzol, 2-Ethoxy-5-methoxy-1,4-bis(acetoacetylamino)benzol, 2,5-Dichlor-1,4-bis(acetoacetylamino)benzol, 2-Chlor-5-methyl-1,4-bis(acetoacetylamino)benzol, 2-Chlor-5-methoxy-1,4-bis(acetoacetylamino)benzol, 2-Chlor-5-ethoxy-1,4-bis(acetoacetylamino)benzol, 2,5-Dimethyl-1,4-bis(acetoacetylamino)benzol, 2-Methyl-5-methoxy-1,4-bis(acetoacetylamino)benzol, 2-Methyl-5-ethoxy-1,4-bis(acetoscetylamino)benzol, 2-Methyl-5-propoxy-1,4-bis(acetoacetylamino)benzol, 2-Methyl-5-isopropoxy-1,4-bis(acetoacetylamino)benzol oder 2-Methyl-5-butoxy-1,4-bis(acetoacetylamino)benzol ist.

Die einer Verbindung der Formel (I) zugrundeliegende(n) Diazokomponente(n) ist ein 2-(Aminophenyl)-benzthiazol der Formel (III) oder sind zwei verschiedene 2-(Aminophenyl)-benzthiazole der Formel (III), 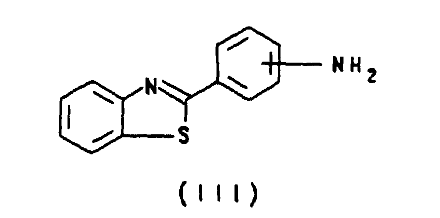 worin die aromatischen Ringe unsubstituiert oder wie vorstehend beschrieben substituiert sind. Von besonderem Interesse im Sinne der vorliegenden Erfindung sind 2-(4-Aminophenyl)benzthiazol, 2-(3-Aminophenyl)benzthiazol und 2-(2-Aminophenyl)benzthiazol sowie substituierte
2-(4-Aminophenyl)benzthiazole, 2-(3-Aminophenyl)benzthiazole und 2-(2-Aminophenyl)benzthiazole, die im Phenylring, der an der 2-Position des Benzthiazol-Systems steht, sowie am Benzolkern des Benzthiazol-Systems unabhängig voneinander jeweils einen oder mehrere Substituenten aus der Gruppe C₁-C₄-Alkyl, vorzugsweise Methyl oder Ethyl; C₁-C₄-Alkoxy, vorzugsweise Methoxy oder Ethoxy; Carboxy; Carbalkoxy, vorzugsweise Carbomethoxy, Carboethoxy, Carbopropoxy, Carboisopropoxy oder Carbobutoxy; C₂-C₅-Alkanoyl, vorzugsweise Acetyl, oder Benzoyl; Acyloxy, vorzugsweise Acetoxy; Acylamino, vorzugsweise Acetylamino oder Benzoylamino; unsubstituiertes N-mono- oder N,N-disubstituiertes Carbamoyl oder unsubstituiertes N-mono- oder N,N-disubstituiertes Sulfamoyl, wobei als Substituenten C₁-C₄-Alkyl oder ein- bis dreifach substituiertes Phenyl in Betracht kommen; C₁-C₄-Alkylamino oder Phenylamino; C₁-C₄-Alkylsulfonyl oder Phenylsulfonyl; Phenylsulfonylamino; Cyano; Halogen, vorzugsweise Chlor oder Brom; Nitro und Trifluormethyl aufweisen.

Beispiele substituierter 2-(Aminophenyl)benzthiazole sind erfindungsgemäß 6-Methoxy-2-(4-amino-3-nitrophenyl)benzthiazol, 2-(4-Amino-3-nitrophenyl)benzthiazol, 4,7-Dimethyl-2-(4-aminophenyl)benzthiazol, 5-Carboxy-2-(4-aminophenyl)benzthiazol, 5-Carbamoyl-2-(4-aminophenyl)benzthiazol, 5-Sulfamoyl-2-(3-amino-4-methoxyphenyl)benzthiazol, 5-Sulfamoyl-2-(4-aminophenyl)benzthiazol, 6-Ethoxy-2-(3-amino-4-nitrophenyl)benzthiazol, 6-Methyl-2-(4-amino-3,5-dibromphenyl)benzthiazol, 2-(3-Amino-5-chlorphenyl)benzthiazol, 6-Methoxy-2-(4-aminophenyl)benzthiazol, 6-Dimethylamino-2-(4-aminophenyl)benzthiazol, 2-(2-Amino-3-chlor-5-nitrophenyl)benzthiazol, 5-Chlor-2-(2-amino-3-brom-5-nitrophenyl)benzthiazol, 2-(2-Amino-3-brom-5-nitrophenyl)benzthiazol, 5-Chlor-2-(2-amino-5-nitrophenyl)benzthiazol, 2-(2-Amino-5-nitrophenyl)benzthiazol, 5-Methyl-2-(4-aminophenyl)benzthiazol, 4-Methyl-2-(4-aminophenyl)benzthiazol, 6-Carboxy-2-(4-aminophenyl)benzthiazol, 6-Methyl-2-(4-aminophenyl)benzthiazol, 6-Methyl-2-(3-amino-4-dimethylaminophenyl)benzthiazol, 4,6-Dimethyl-2-(2-amino-5-methylphenyl)benzthiazol und 4,6-Dimethyl-2-(4-amino-3-methylphenyl)benzthiazol.

Beispiele für die einer Verbindung der Formel (II) zugrundeliegende(n) Diazokomponente(n) sind unsubstituiertes oder wie vorstehend beschrieben substituiertes 2-(4-Aminophenyl)-benzthiazol oder eine Kombination aus zwei verschiedenen der besagten 2-(4-Aminophenyl)-benzthiazole.

Die erfindungsgemäß besonders bevorzugte Diazokomponente ist 6-Methyl-2-(4-aminophenyl)-benzthiazol.

Erfindungsgemäß besonders relevante Azofarbmittel sind solche, deren Kupplungskomponente 1,4-Bis(acetoacetylamino)benzol, 2,5-Dimethyl-1,4-bis(acetoacetylamino)benzol, 2-Chlor-1,4-bis(acetoacetylamino)benzol, 2,5-Dichlor-1,4-bis(acetoacetylamino)benzol, 2-Methyl-5-methoxy-1,4-bis(acetoacetylamino)benzol, 2-Methyl-1,4-bis(acetoacetylamino)benzol, 2-Methoxy-1,4-bis(acetoacetylamino)benzol oder 2,5-Dimethoxy-1,4-bis(acetoacetylamino)benzol ist und deren Diazokomponente 6-Methyl-2-(4-aminophenyl)benzthiazol, 2-(4-Aminophenyl)benzthiazol, 2-(2-Amino-5-nitrophenyl)benzthiazol oder eine Kombination davon ist.

Gegenstand der vorliegenden Erfindung ist auch ein Verfahren zur Herstellung der erfindungsgemäßen Verbindungen der allgemeinen Formel (I), dadurch gekennzeichnet, daß man ein oder mehrere verschiedene, vorzugsweise ein oder zwei, Amine der allgemeinen Formel (III), worin die aromatischen Ringe unsubstituiert oder entsprechend Formel (I) substituiert sind, diazotiert und mit 0,45 bis 0,55 Mol, bevorzugt mit 0,50 bis 0,53 Mol, bezogen auf insgesamt 1 Mol Amin der Formel (III), einer oder mehrerer verschiedener Kupplungskomponenten der Formel (IV), 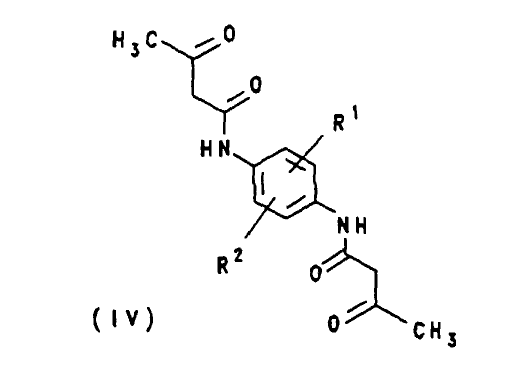 worin R¹ und R² die vorstehend definierten Bedeutungen haben, umsetzt. Das erfindungsgemäße Verfahren wird insbesondere in der Weise durchgeführt, daß man ein Amin der Formel (V), 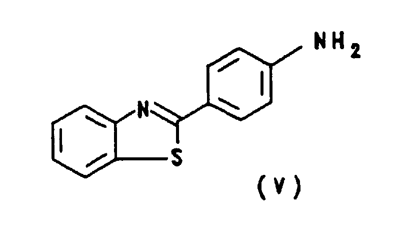 worin die aromatischen Ringe unsubstituiert oder entsprechend Formel (II) substituiert sind, diazotiert und mit 0,50 bis 0,53 Mol, bezogen auf ein Mol Amin der Formel (V), einer Verbindung der vorstehend aufgeführten Formel (VI) umsetzt.

Die Herstellung der 2-(Aminophenyl)-benzthiazole der Formel (III) ist in DE-A- 2 125 193 und in DE-A- 2 106 200 (US-PS 3 801 587) beschrieben.

Die erfindungsgemäß als Kupplungskomponenten eingesetzten 1,4-Bis(acetoacetylamino)benzole lassen sich in üblicher Weise aus den entsprechenden p-Phenylendiaminen durch Umsetzung mit Diketen oder Acetessigester herstellen.

Die Azokupplung zur Herstellung der erfindungsgemäßen Verbindungen der Formel (I) erfolgt im wäßrigen Medium, gegebenenfalls in Gegenwart nichtionogener, anionischer oder kationischer oberflächenaktiver Substanzen. Gegebenenfalls können im Herstellungsprozeß der Farbmittel auch andere Hilfsmittel, wie natürliche oder synthetische Harze oder Harzderivate oder übliche Lack-, Druckfarben- oder Kunststoffadditive verwendet werden. Die Kupplung kann auch ganz oder teilweise in organischen Lösungsmitteln erfolgen.

Die erfindungsgemäßen Verbindungen der Formel (I) stellen wertvolle wasserunlösliche Farbmittel dar und können nach der Kupplungsreaktion in üblicher Weise isoliert werden. Häufig ist es zweckmäßig, die nach der Kupplungsreaktion erhaltenen Azofarbmittel zur Erzielung der vollen Farbstärke und einer besonders günstigen Kristallstruktur einer Nachbehandlung zu unterwerfen.

Beispielsweise kann man zu diesem Zweck die feuchten oder getrockneten und gemahlenen Pigmente in organischen Lösungsmitteln, wie beispielsweise in Pyridin, N-Methyl-2-pyrrolidon, Dimethylformamid, Dimethylsulfoxid, Alkoholen, Chlorbenzol, Dichlorbenzol, Eisessig, Chinolin, Glycol, Nitrobenzol oder aromatischen Kohlenwasserstoffen, einige Zeit, vorzugsweise 0,5 bis 4 Stunden, gegebenenfalls unter erhöhtem Druck, erhitzen. In einigen Fällen gelingt die Überführung in eine günstige Kristallstruktur auch schon durch Erhitzen in Wasser, gegebenenfalls unter Druck und gegebenenfalls unter Zusatz von Dispergiermitteln oder organischen Lösungsmitteln, beispielsweise der vorstehend genannten Art.

Weiterhin lassen sich erfindungsgemäße Verbindungen der Formel (I), die verlackbare Carboxy-Gruppen enthalten, nach bekannten Verfahren in Farblacke überführen.

Gegenstand der vorliegenden Erfindung ist auch die Verwendung der erfindungsgemäßen wasserunlöslichen Verbindungen der Formel (I) zum Färben von natürlichen und synthetischen Materialien. Beispielweise sind die erfindungsgemäßen Verbindungen geeignet zum Pigmentieren von Polystyrol, Polyolefinen, vorzugsweise Polyethylen oder Polypropylen, Polyacrylverbindungen, Polyvinylverbindungen, vorzugsweise Polyvinylchlorid oder Polyvinylacetat, Polyestern, Gummi, Caseinharzen oder Silikonharzen. Die erfindungsgemäßen Verbindungen eignen sich ferner für die Herstellung von Druckfarben, für die Zubereitung von Lackfarben und Dispersionsanstrichfarben, für den Druck auf Substraten wie Textilfasern oder auch auf anderen flächenförmigen Gebilden, wie beispielsweise Papier.

Die erfindungsgemäßen Pigmente können auch, vorzugsweise in feinverteilter Form, zum Färben von Kunstseide vorzugsweise aus Viskose oder Celluloseethern, Celluloseestern, Polyamiden, Polyurethanen oder Polyglykolterephthalaten, in der Spinnmasse oder zum Einfärben von Papier verwendet werden.

Gegenstand der vorliegenden Erfindung sind auch Farbmittelzubereitungen, enthaltend mindestens eine der Verbindungen gemäß Formel (I) oder (II).

In den folgenden Beispielen beziehen sich "Teile" auf das Gewicht, Volumenteile verhalten sich zu Gewichtsteilen wie Liter zu Kilogramm. NMP bedeutet N-Methylpyrrolidon.

### Beispiel 1:

### Diazoniumsalzlösung:

24,0 Teile 6-Methyl-2-(4-aminophenyl)benzthiazol werden in 150 Volumenteilen Eisessig und 30 Volumenteilen 31%iger Salzsäure zwei Stunden bei etwa 22^{o}C gerührt. Durch Zugabe von Eis wird die Mischung auf 5°C abgekühlt, und innerhalb von 15 Minuten werden 14,3 Volumenteile 38%ige Natriumnitritlösung zugetropft. Es wird 90 Minuten bei 5°C bis 10°C gerührt. Die so erhaltene Diazoniumsalzlösung klärt man durch Filtration und zerstört den Nitritüberschuß durch Amidosulfonsäure.

### Lösung der Kupplungskomponente:

14,2 Teile 1,4-Bis(acetoacetylamino)benzol werden in 250 Volumenteilen Wasser und 15 Volumenteilen 33%iger Natronlauge gelöst. Zu dieser Lösung werden 100 Teile Eis gegeben.

### Kupplung:

In einem Reaktionsgefäß zur Azokupplung werden die Diazoniumsalzlösung, 150 Teile Eis und 4 Teile einer 30%igen wäßrigen Lösung eines Cocosalkyldimethylaminoxids vorgelegt, und mit 225 Volumenteilen 4-molarer Natriumacetatlösung wird der pH-Wert auf 3,9 bis 4,1 eingestellt. Diese Mischung wird innerhalb von 30 bis 40 Minuten mit der Lösung der Kupplungskomponente versetzt. Nach beendeter Kupplung erhitzt man die Pigmentsuspension durch Einleiten von Dampf auf 98°C und hält diese Temperatur 30 Minuten. Man läßt auf 80°C abkühlen, saugt das Pigment ab und wäscht mit Wasser. Nach dem Trocknen bei 65°C wird das Pigment gemahlen.

### Nachbehandlung:

Das gemahlene Pigment wird in 600 Volumenteilen Dimethylformamid unter Rühren auf 120°C erhitzt und 2 Stunden bei dieser Temperatur gehalten. Das Pigment wird abgesaugt, mit Dimethylformamid, danach mit Aceton gewaschen und getrocknet. Nach dem Mahlen erhält man 29,3 Teile eines gelben Pigments mit einer spezifischen Oberfläche von 47 m²/g, das sich ab 355°C zersetzt. Das Pigment weist eine hohe Farbstärke auf und liefert nach Einarbeitung in eine Buchdruckfarbe gelbe Drucke mit reiner Nuance.
- IR-Spektrum (KBr):: 1660, 1608, 1573, 1527, 1502, 1486, 1411, 1360, 1291, 1270, 1211, 1187, 1168, 970, 951 cm⁻¹.

### Beispiel 2:

Diazoniumsalzlösung wie in Beispiel 1.

### Lösung der Kupplungskomponente:

15,6 Teile 2,5-Dimethyl-1,4-bis(acetoacetylamino)benzol werden in 250 Volumenteilen Wasser und 15 Volumenteilen 33%iger Natronlauge gelöst. Zu dieser Lösung werden 100 Teile Eis gegeben.

Die Kupplung erfolgt auf die gleiche Weise wie in Beispiel 1.

### Nachbehandlung:

Das gemahlene Pigment wird in 700 Volumenteilen N-Methyl-2-pyrrolidon (NMP) unter Rühren auf 130°C erhitzt und 3,5 Stunden bei dieser Temperatur gehalten. Das Pigment wird abgesaugt, mit NMP, danach mit Aceton gewaschen und getrocknet. Nach dem Mahlen erhält man 31,8 Teile eines rotstichig gelben Pigments, das sich ab 350°C zersetzt. Das Pigment ist sehr farbstark und liefert nach Einarbeitung in Polyvinylchlorid, in eine Buchdruckfarbe oder in einen Alkyd-Melamin-Einbrennlack rotstichig gelbe Färbungen. In der Lackierung weist es ausgezeichnete Überlackierechtheit auf.
- IR-Spektrum (KBr):: 1659, 1607, 1572, 1510, 1453, 1412, 1358, 1274, 1224, 1166, 1111, 972, 951, 830, 814 cm⁻¹.

### Beispiel 3:

Diazoniumsalzlösung wie in Beispiel 1.

### Lösung der Kupplungskomponente:

16,0 Teile 2-Chlor-1,4-bis(acetoacetylamino)benzol werden in 250 Volumenteilen Wasser und 15 Volumenteilen 33%iger Natronlauge gelöst. Zu dieser Lösung werden 100 Teile Eis gegeben.

Die Kupplung erfolgt auf die gleiche Weise wie in Beispiel 1.

### Nachbehandlung:

Das gemahlene Pigment wird in 800 Volumenteilen Dimethylformamid unter Rühren auf 145°C erhitzt und 1,5 Stunden bei dieser Temperatur gehalten. Das Pigment wird abgesaugt, mit Dimethylformamid, danach mit Aceton gewaschen und getrocknet. Nach dem Mahlen erhält man 32,1 Teile eines rotstichig gelben Pigments, das sich ab 353°C zersetzt. Eingearbeitet in Polyvinylchlorid liefert das Pigment rotstichig gelbe Färbungen mit guter Ausblutechtheit.
- IR-Spektrum (KBr):: 1668, 1606, 1571, 1521, 1484, 1406, 1359, 1317, 1291, 1273, 1258, 1223, 1186, 1168, 967, 952, 833, 811 cm⁻¹.

### Beispiel 4:

Diazoniumsalzlösung wie in Beispiel 1.

### Lösung der Kupplungskomponente:

17,8 Teile 2,5-Dichlor-1,4-bis(acetoacetylamino)benzol werden in 250 Volumenteilen Wasser und 15 Volumenteilen 33%iger Natronlauge gelöst. Zu dieser Lösung werden 100 Teile Eis gegeben.

Die Kupplung erfolgt auf die gleiche Weise wie in Beispiel 1.

### Nachbehandlung:

Das gemahlene Pigment wird in 800 Volumenteilen NMP unter Rühren auf 140°C erhitzt und 3,5 Stunden bei dieser Temperatur gehalten. Das Pigment wird abgesaugt, mit NMP, danach mit Aceton gewaschen und getrocknet. Nach dem Mahlen erhält man 31,2 Teile eines rotstichig gelben Pigments mit einem Schmelzpunkt über 350°C. Eingearbeitet in eine Buchdruckfarbe liefert dieses sehr farbstarke Pigment transparente rotstichig gelbe Drucke mit reinem Farbton.
- IR-Spektrum (KBr):: 1668, 1606, 1561, 1512, 1484, 1383, 1358, 1317, 1262, 1216, 1169, 967, 952, 833, 812, 777 cm⁻¹.

### Beispiel 5:

Diazoniumsalzlösung wie in Beispiel 1.

### Lösung der Kupplungskomponente:

16,5 Teile 2-Methoxy-5-methyl-1,4-bis(acetoacetylamino)benzol werden in 250 Volumenteilen Wasser und 15 Volumenteilen 33%iger Natronlauge gelöst. Zu dieser Lösung werden 100 Teile Eis gegeben.

Die Kupplung erfolgt auf die gleiche Weise wie in Beispiel 1.

### Nachbehandlung:

Das gemahlene Pigment wird in 700 Volumenteilen NMP unter Rühren auf 140°C erhitzt und 1 Stunde bei dieser Temperatur gehalten. Das Pigment wird abgesaugt, mit NMP, danach mit Aceton gewaschen und getrocknet. Nach dem Mahlen erhält man 30,6 Teile eines orangefarbenen Pigments, das sich ab 348°C zersetzt. Nach Einarbeitung in einen Alkyd-Melamin-Einbrennlack liefert das Pigment orangefarbene Lackierungen mit ausgezeichneter Überlackierechtheit.
- IR-Spektrum (KBr):: 1663, 1606, 1570, 1508, 1486, 1454, 1415, 1290, 1268, 1221, 1166, 967, 951, 817 cm⁻¹.

### Beispiel 6:

Diazoniumsalzlösung wie in Beispiel 1.

### Lösung der Kupplungskomponente:

14,9 Teile 2-Methyl-1,4-bis(acetoacetylamino)benzol werden in 250 Volumenteilen Wasser und 15 Volumenteilen 33%iger Natronlauge gelöst. Zu dieser Lösung werden 100 Teile Eis gegeben.

Die Kupplung erfolgt auf die gleiche Weise wie in Beispiel 1.

### Nachbehandlung:

Das gemahlene Pigment wird in 700 Volumenteilen NMP unter Rühren auf 140°C erhitzt und 3,5 Stunden bei dieser Temperatur gehalten. Das Pigment wird abgesaugt, mit NMP, danach mit Aceton gewaschen und getrocknet. Nach dem Mahlen erhält man 35,8 Teile eines gelben Pigments, mit einer spezifischen Oberfläche von 63 m²/g, das sich ab 345°C zersetzt. Das Pigment ist sehr farbstark und färbt Polyvinylchlorid in reinem rotstichig gelben Farbton. Eingearbeitet in einen Alkyd-Melamin-Einbrennlack erhält man reine, rotstichig gelbe Lackierungen mit sehr guter Überlackierechtheit.
- IR-Spektrum (KBr):: 1659, 1608, 1573, 1517, 1488, 1452, 1418, 1358, 1270, 1229, 1211, 1167, 971, 949, 816 cm⁻¹.

### Beispiel 7:

Diazoniumsalzlösung wie in Beispiel 1.

### Lösung der Kupplungskomponente:

17,3 Teile 2,5-Dimethoxy-1,4-bis(acetoacetylamino)benzol werden in 250 Volumenteilen Wasser und 15 Volumenteilen 33%iger Natronlauge gelöst. Zu dieser Lösung werden 100 Teile Eis gegeben.

Die Kupplung erfolgt auf die gleiche Weise wie in Beispiel 1.

### Nachbehandlung:

Das gemahlene Pigment wird in 600 Volumenteilen NMP unter Rühren auf 140°C erhitzt und 1 Stunde bei dieser Temperatur gehalten. Das Pigment wird abgesaugt, mit NMP, danach mit Aceton gewaschen und getrocknet. Nach dem Mahlen erhält man 33,6 Teile eines orangefarbenen Pigments mit einem Schmelzpunkt über 350°C. Eingearbeitet in eine Buchdruckfarbe, liefert dieses farbstarke Pigment reine orangefarbene Drucke.
- IR-Spektrum (KBr):: 1661, 1606, 1559, 1511, 1485, 1453, 1414, 1358, 1292, 1264, 1215, 1165, 967, 952, 822 cm⁻¹.

### Beispiel 8:

Diazoniumsalzlösung wie in Beispiel 1.

### Lösung der Kupplungskomponente:

15,8 Teile 2-Methoxy-1,4-bis(acetoacetylamino)benzol werden in 250 Volumenteilen Wasser und 15 Volumenteilen 33%iger Natronlauge gelöst. Zu dieser Lösung werden 100 Teile Eis gegeben.

Die Kupplung erfolgt auf die gleiche Weise wie in Beispiel 1.

### Nachbehandlung:

Das gemahlene Pigment wird in 600 Volumenteilen NMP unter Rühren auf 135°C erhitzt und 1 Stunde bei dieser Temperatur gehalten. Das Pigment wird abgesaugt, mit NMP, danach mit Aceton gewaschen und getrocknet. Nach dem Mahlen erhält man 31,4 Teile eines rotstichig gelben Pigments, das sich ab 342°C zersetzt. In einen Alkyd-Melamin-Einbrennlack eingearbeitet, lassen sich von diesem Pigment deckende rotstichig gelbe Lackierungen mit einwandfreier Überlackierechtheit erzeugen.
- IR-Spektrum (KBr):: 1661, 1606, 1568, 1516, 1499, 1485, 1450, 1417, 1359, 1316, 1284, 1266, 1219, 1186, 1165, 967, 949, 812 cm⁻¹.

### Beispiel 9:

Diazoniumsalzlösung wie in Beispiel 1.

### Lösung der Kupplungskomponente:

12,8 Teile 1,4-Bis(acetoacetylamino)benzol und 1,8 Teile 2,5-Dichlor-1,4-bis(acetoacetylamino)benzol werden in 250 Volumenteilen Wasser und 15 Volumenteilen 33%iger Natronlauge gelöst. Zu dieser Lösung werden 100 Teile Eis gegeben.

Die Kupplung erfolgt auf die gleiche Weise wie in Beispiel 1.

### Nachbehandlung:

Das gemahlene Pigment wird in 700 Volumenteilen NMP unter Rühren auf 150°C erhitzt und 2 Stunden bei dieser Temperatur gehalten. Das Pigment wird abgesaugt, mit NMP, danach mit Aceton gewaschen und getrocknet. Nach dem Mahlen erhält man 32,1 Teile eines gelben Pigments, das sich ab 353°C zersetzt. Es färbt Polyvinylchlorid bei guter Ausblutechtheit in einem reinen gelben Farbton.
- IR-Spektrum (KBr):: 1660, 1608, 1572, 1527, 1500, 1487, 1454, 1411, 1359, 1291, 1268, 1210, 1187, 1168, 970, 951, 839, 817 cm⁻¹.

### Beispiel 10:

Diazoniumsalzlösung wie in Beispiel 1.

### Lösung der Kupplungskomponente:

12,8 Teile 1,4-Bis(acetoacetylamino)benzol und 1,7 Teile 2-Methoxy-5-methyl-1,4-bis(acetoacetylamino)benzol werden in 250 Volumenteilen Wasser und 15 Volumenteilen 33%iger Natronlauge gelöst. Zu dieser Lösung werden 100 Teile Eis gegeben.

Die Kupplung erfolgt auf die gleiche Weise wie in Beispiel 1.

### Nachbehandlung:

Das gemahlene Pigment wird in 700 Volumenteilen NMP unter Rühren auf 150°C erhitzt und 2 Stunden bei dieser Temperatur gehalten. Das Pigment wird abgesaugt, mit NMP, danach mit Aceton gewaschen und getrocknet. Nach dem Mahlen erhält man 32,3 Teile eines gelben Pigments, das sich ab 351°C zersetzt. Dieses farbstarke Disazopigment färbt Polyvinylchlorid in einem reinen gelben Farbton.
- IR-Spektrum (KBr):: : 1660, 1608, 1573, 1527, 1501, 1486, 1412, 1360, 1291, 1271, 1211, 1187, 1167, 971, 951, 833, 817 cm⁻¹.

### Beispiel 11:

Man verfährt wie in Beispiel 1, trocknet das Rohpigment jedoch nicht, sondern setzt den feuchten Filterkuchen in den Nachbehandlungsschritt ein.
Dazu werden 100 Teile Filterkuchen mit einem Feststoffgehalt von 18% mit 157 Teilen iso-Butanol im Rührautoklaven auf 150°C erhitzt und eine Stunde bei dieser Temperatur gehalten. Nach Abkühlen auf 80°C wird das iso-Butanol mittels Wasserdampfdestillation entfernt, anschließend das Pigment abgesaugt, mit Wasser gewaschen, bei 65°C getrocknet und gemahlen. Man erhält 15,8 Teile eines gelben Pigments mit einer spezifischen Oberfläche von 60 m²/g, das sich ab 355°C zersetzt.

### Beispiel 12:

Man verfährt wie in Beispiel 6, trocknet das Rohpigment jedoch nicht, sondern setzt den feuchten Filterkuchen in den Nachbehandlungsschritt ein.
Dazu werden 200 Teile Filterkuchen mit einem Feststoffgehalt von 15,2 % mit 234 Teilen iso-Butanol im Rührautoklaven auf 150°C erhitzt und eine Stunde bei dieser Temperatur gehalten. Nach Abkühlen auf 80°C wird das iso-Butanol mittels Wasserdampfdestillation entfernt, anschließend das Pigment abgesaugt, mit Wasser gewaschen, bei 65°C getrocknet und gemahlen. Man erhält 27,1 Teile eines gelben Pigments mit einer spezifischen Oberfläche von 67 m²/g, das sich ab 345°C zersetzt.

### Beispiel 13:

### Diazoniumsalzlösung:

22,6 Teile 2-(4-Aminophenyl)benzthiazol werden in 50 Volumenteilen Eisessig und 30 Volumenteilen 31%iger Salzsäure zwei Stunden bei etwa 22^{o}C gerührt. Es werden 300 Volumenteile Wasser zugesetzt, und durch Zugabe von Eis wird die Mischung auf 5°C abgekühlt. Innerhalb von 15 Minuten werden 14,3 Volumenteile 38%ige Natriumnitritlösung zugetropft. Danach wird 90 Minuten bei 5°C bis 10°C gerührt. Anschließend wird der Nitritüberschuß durch Zugabe von Amidosulfonsäure zerstört.

### Lösen und Fällen der Kupplungskomponente:

14,2 Teile 1,4-Bis(acetoacetylamino)benzol werden in 250 Volumenteilen Wasser und 15 Volumenteilen 33%iger Natronlauge gelöst. Zu dieser Lösung werden 125 Teile Eis gegeben. Durch Zugabe von 28 Volumenteilen 50%iger Essigsäure innerhalb einer Minute wird die Kupplungskomponente ausgefällt.

### Kupplung:

In einem Reaktionsgefäß zur Azokupplung werden die Diazoniumsalzsuspension, 150 Teile Eis und 4 Teile einer 30%igen wäßrigen Lösung eines Cocosalkyldimethylaminoxids vorgelegt, und mit etwa 150 Volumenteilen 4-molarer Natriumacetatlösung wird der pH-Wert auf 4 eingestellt. Diese Mischung wird innerhalb von 30 bis 40 Minuten mit der Suspension der Kupplungskomponente versetzt. Nach beendeter Kupplung erhitzt man die Pigmentsuspension durch Einleiten von Dampf auf 98°C und hält diese Temperatur 30 Minuten aufrecht. Man läßt auf 80°C abkühlen, saugt das Pigment ab und wäscht mit Wasser. Nach dem Trocknen bei 65°C wird das Pigment gemahlen.

### Nachbehandlung:

Das gemahlene Pigment wird in 500 Volumenteilen NMP unter Rühren auf 130°C erhitzt und 1 Stunde bei dieser Temperatur gehalten. Das Pigment wird abgesaugt, mit NMP, danach mit Aceton gewaschen und getrocknet. Nach dem Mahlen erhält man 28,4 Teile eines gelben Pigments, das bis 350°C nicht schmilzt.
- IR-Spektrum (KBr):: 1668, 1576, 1528, 1502, 1483, 1414, 1358, 1316, 1291, 1273, 1212, 1188, 1167, 966, 952, 831, 753 cm⁻¹.

### Beispiel 14:

### Diazoniumsalzlösung:

27,1 Teile 2-(2-Amino-5-nitrophenyl)benzthiazol werden in 250 Volumenteilen Eisessig und 30 Volumenteilen 31%iger Salzsäure zwei Stunden bei etwa 22^{o}C gerührt. Es werden 300 Volumenteile Wasser zugesetzt und durch Zugabe von Eis wird die Mischung auf 5°C abgekühlt. Innerhalb von 15 Minuten werden 14,3 Volumenteile 38%ige Natriumnitritlösung zugetropft. Es wird 90 Minuten bei 5°C bis 10°C nachgerührt. Anschließend wird der Nitritüberschuß durch Zugabe von Amidosulfonsäure zerstört und die Diazoniumsalzsuspension mit 800 Volumenteilen Wasser verdünnt.

### Lösen und Fällen der Kupplungskomponente:

14,2 Teile 1,4-Bis(acetoacetylamino)benzol werden in 250 Volumenteilen Wasser und 15 Volumenteilen 33%iger Natronlauge gelöst. Zu dieser Lösung werden 125 Teile Eis gegeben. Durch Zugabe von 28 Volumenteilen 50%iger Essigsäure innerhalb einer Minute wird die Kupplungskomponente ausgefällt.

### Kupplung:

In einem Reaktionsgefäß zur Azokupplung werden die Diazoniumsalzsuspension, 150 Teile Eis und 4 Teile einer 30%igen wäßrigen Lösung eines Cocosalkyldimethylaminoxids vorgelegt, und mit etwa 150 Volumenteilen 4-molarer Natriumacetatlösung wird der pH-Wert auf 4 eingestellt. Diese Mischung wird innerhalb von 20 Minuten mit der Suspension der Kupplungskomponente versetzt. Nach beendeter Kupplung erhitzt man die Pigmentsuspension durch Einleiten von Dampf auf 98°C und hält diese Temperatur für 30 Minuten. Man läßt auf 80°C abkühlen, saugt das Pigment ab und wäscht mit Wasser. Nach dem Trocknen bei 65°C wird das Pigment gemahlen.

### Nachbehandlung:

Das gemahlene Pigment wird in 800 Volumenteilen Eisessig unter Rühren eine Stunde am Rückfluß erhitzt. Das Pigment wird abgesaugt, mit Eisessig, danach mit Aceton gewaschen und getrocknet. Nach dem Mahlen erhält man 31,8 Teile eines rotstichig gelben Pigments, das sich ab 334°C zersetzt.
- IR-Spektrum (KBr):: 1671, 1625, 1591, 1505, 1478, 1330, 1302, 1290, 1264, 1244, 1228, 1169, 1113, 982, 898, 831, 757, 751, 727 cm⁻¹.

### Beispiel 15:

### Diazoniumsalzlösung:

2,8 Teile 2-(2-Amino-5-nitrophenyl)benzthiazol und 21,6 Teile 6-Methyl-2-(4-amino-phenyl)benzthiazol werden in 50 Volumenteilen Eisessig und 30 Volumenteilen 31%iger Salzsäure zwei Stunden bei etwa 22°C gerührt. Es werden 500 Volumenteile Wasser zugesetzt, und durch Zugabe von Eis wird die Mischung auf 5°C abgekühlt. Innerhalb von 15 Minuten werden 14,3 Volumenteile 38%ige Natriumnitritlösung zugetropft. Danach wird 90 Minuten bei 5°C bis 10°C gerührt. Anschließend wird der Nitritüberschuß durch Zugabe von Amidosulfonsäure zerstört.

### Lösen und Fällen der Kupplungskomponente:

14,2 Teile 1,4-Bis(acetoacetylamino)benzol werden in 250 Volumenteilen Wasser und 15 Volumenteilen 33%iger Natronlauge gelöst. Zu dieser Lösung werden 125 Teile Eis gegeben. Durch Zugabe von 28 Volumenteilen 50%iger Essigsäure innerhalb einer Minute wird die Kupplungskomponente ausgefällt.

### Kupplung:

In einem Reaktionsgefäß zur Azokupplung werden die Diazoniumsalzsuspension, 150 Teile Eis und 4 Teile einer 30%igen wäßrigen Lösung eines Cocosalkyldimethylaminoxids vorgelegt, und mit etwa 50 Volumenteilen 4-molarer Natriumacetatlösung wird der pH-Wert auf 4 eingestellt. Diese Mischung wird innerhalb von 20 Minuten mit der Suspension der Kupplungskomponente versetzt. Nach beendeter Kupplung erhitzt man die Pigmentsuspension durch Einleiten von Dampf auf 98°C und hält diese Temperatur für 30 Minuten. Man läßt auf 80°C abkühlen, saugt das Pigment ab und wäscht mit Wasser. Nach dem Trocknen bei 65°C wird das Pigment gemahlen.

### Nachbehandlung:

Das gemahlene Pigment wird in 800 Volumenteilen Eisessig unter Rühren 2 Stunden am Rückfluß erhitzt. Das Pigment wird abgesaugt, mit Eisessig, danach mit Aceton gewaschen und getrocknet. Nach dem Mahlen erhält man 34,8 Teile eines gelben Pigments, das bis 350°C nicht schmilzt.
- IR-Spektrum (KBr):: 1660, 1629, 1608, 1526, 1502, 1412, 1360, 1291, 1268, 1211, 1187, 1168, 970, 950, 835, 817 cm⁻¹.

## Patentansprüche

1. Disazoverbindung der Formel (I) 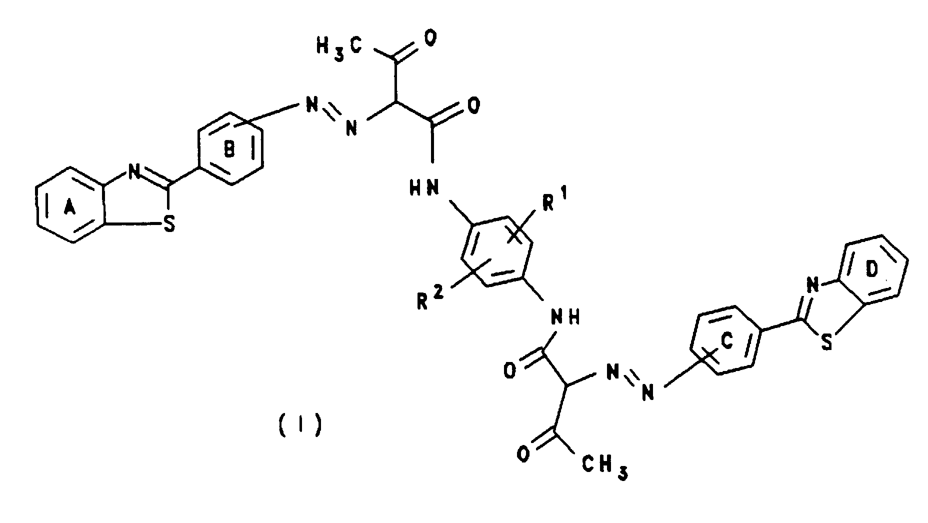 worin R¹ und R² gleich oder verschieden sind und ein Wasserstoff- oder Halogenatom, eine C₁-C₄-Alkyl-, C₁-C₄-Alkoxy-, C₁-C₅-Alkoxycarbonyl-, Nitro-, Cyano- oder Trifluormethylgruppe bedeuten und
die Ringe A, B, C und D unabhängig voneinander unsubstituiert sind oder einen oder mehrere Substituenten aus der Gruppe C₁-C₄-Alkyl, C₁-C₄-Alkoxy, Carboxy, C₁-C₅- Carbalkoxy, C₂-C₅-Alkanoyl, Benzoyl, Acyloxy, Acylamino, unsubstituiertes oder N-mono- oder N,N-disubstituiertes Carbamoyl oder unsubstituiertes oder N-mono- oder N,N-disubstituiertes Sulfamoyl, wobei als Substituenten C₁-C₄-Alkyl oder ein- bis dreifach substituiertes Phenyl in Betracht kommen; C₁-C₄-Alkylamino oder Phenylamino; C₁-C₄-Alkylsulfonyl oder Phenylsulfonyl; Phenylsulfonylamino; Cyano; Halogen, Nitro und Trifluormethyl aufweisen.

2. Disazoverbindung nach Anspruch 1, gekennzeichnet durch die Formel (II) 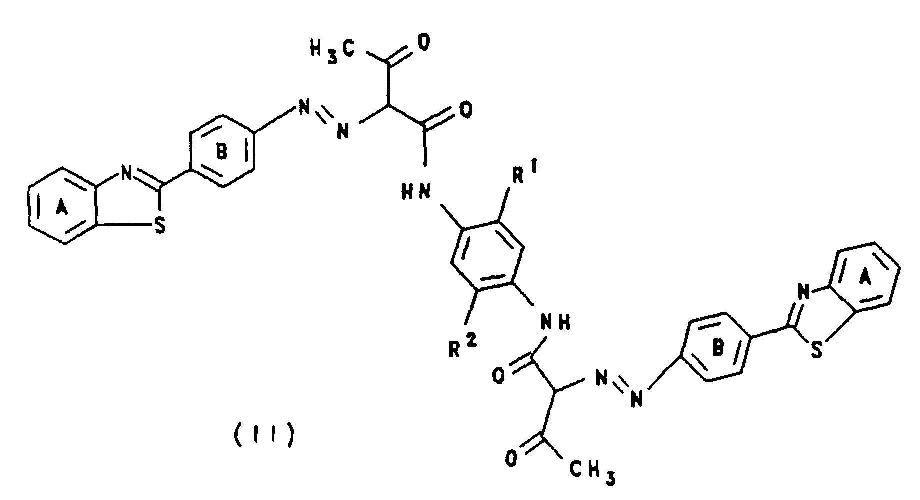 worin R¹ und R² die in Anspruch 1 angegebenen Bedeutungen haben und die Ringe A und B jeweils unabhängig voneinander mit ein bis drei Resten entsprechend Anspruch 1 substituiert sind.

3. Disazoverbindung nach Anspruch 2, dadurch gekennzeichnet, daß R¹ und R² gleich oder verschieden sind und ein Wasserstoff- oder Halogenatom, wobei Halogen vorzugsweise Chlor oder Brom bedeutet, C₁-C₄-Alkyl, vorzugsweise Methyl oder Ethyl, C₁-C₄-Alkoxy, vorzugsweise Methoxy, Ethoxy, Propoxy oder Butoxy, Nitro, Cyano, Trifluormethyl oder C₁-C₅-Alkoxycarbonyl, vorzugsweise Methoxycarbonyl oder Ethoxycarbonyl, bedeuten.

4. Disazoverbindung nach Anspruch 2, dadurch gekennzeichnet, daß die Ringe A und B unsubstituiert sind oder unabhängig voneinander mit 1 bis 3 Substituenten aus der Gruppe Methyl, Ethyl, Methoxy, Ethoxy, Carboxy, Carbomethoxy, Carboethoxy, Carbopropoxy, Carboisopropoxy, Carbobutoxy, Acetyl, Benzoyl, Acetoxy, Acetylamino, Benzoylamino, unsubstituiertes oder N-mono- oder N,N-disubstituiertes Carbamoyl, unsubstituiertes oder N-mono- oder N,N-disubstituiertes Sulfamoyl, wobei als Substituenten C₁-C₄-Alkyl oder ein- bis dreifach substituiertes Phenyl in Betracht kommen, C₁-C₄-Alkylamino, Phenylamino, C₁C₄-Alkylsufonyl, Phenylsulfonyl, Phenylsulfonylamino, Cyano, Chlor, Brom, Nitro und Trifluormethyl substituiert sind.

5. Disazoverbindung nach mindestens einem der Ansprüche 1 bis 4, dadurch gekennzeichnet, daß sie als Kupplungskomponente die Verbindung 1,4-Bis(acetoacetylamino)-benzol, 2,5-Dimethyl-1,4-bis(acetoacetylamino)benzol, 2-Chlor-1,4-bis(acetoacetylamino)benzol, 2,5-Dichlor-1,4-bis(acetoacetylamino)benzol, 2-Methoxy-5-methyl-1,4-bis(acetoacetylamino)benzol, 2-Methyl-1,4-bis(acetoacetylamino)benzol, 2-Methoxy-1,4-bis(acetoacetylamino)benzol oder 2,5-Dimethoxy-1,4-bis(acetoacetylamino)benzol und als Diazokomponente die Verbindung 6-Methyl-2-(4-aminophenyl)benzthiazol, 2-(4-Aminophenyl)benzthiazol oder 2-(2-Amino-5-nitrophenyl)benzthiazol oder eine Kombination davon enthält.

6. Verfahren zur Herstellung einer Disazoverbindung nach mindestens einem der Ansprüche 1 bis 5, dadurch gekennzeichnet, daß man ein oder mehrere verschiedene, vorzugsweise ein oder zwei, Amine der allgemeinen Formel (III), 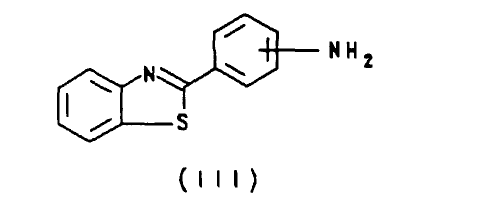 worin die aromatischen Ringe unsubstituiert oder entsprechend Formel (I) substituiert sind, diazotiert
und mit 0,45 bis 0,55 Mol, bevorzugt mit 0,50 bis 0,53 Mol, bezogen auf insgesamt 1 Mol Amin der Formel (III), einer oder mehrerer verschiedener
Kupplungskomponenten der Formel (IV) umsetzt

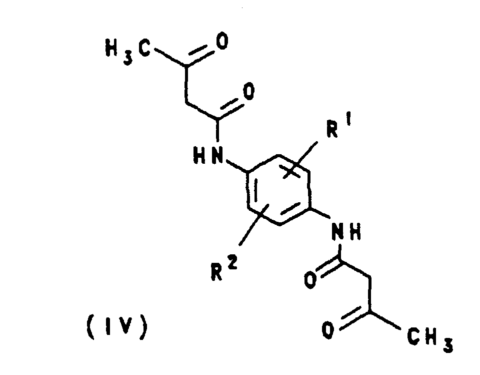

7. Verfahren nach Anspruch 6, dadurch gekennzeichnet, daß man ein Amin der Formel (V) 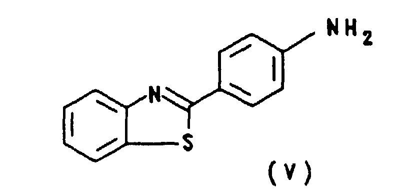 worin die aromatischen Ringe unsubstituiert oder entsprechend Formel (II) gemäß Anspruch 2 substituiert sind, diazotiert und mit 0,50 bis 0,53 Mol, bezogen auf ein Mol Amin der Formel (V), einer Kupplungskomponente der Formel (VI) umsetzt

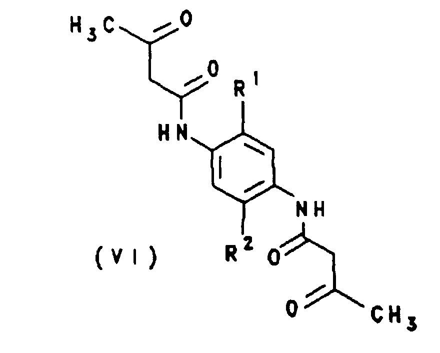

8. Farbmittelzubereitung, enthaltend mindestens eine der Disazoverbindungen gemäß einem der Ansprüche 1 bis 5.

9. Verwendung einer Disazoverbindung nach mindestens einem der Ansprüche 1 bis 5 zum Färben von natürlichen und synthetischen Materialien.

10. Verwendung nach Anspruch 9 zum Pigmentieren von Polystyrol, Polyolefinen, vorzugsweise Polyethylen oder Polypropylen, Polyacrylverbindungen, Polyvinylverbindungen, vorzugsweise Polyvinylchlorid oder Polyvinylacetat, Polyestern, Gummi, Caseinharzen oder Silikonharzen.

11. Verwendung nach Anspruch 9 zur Herstellung von Druckfarben und für die Zubereitung von Lackfarben und Dispersionsanstrichfarben.

12. Verwendung nach Anspruch 9 zum Färben von Kunstseide in der Spinnmasse oder zum Einfärben von Papier.

## Claims

1. A disazo compound of the formula (I) 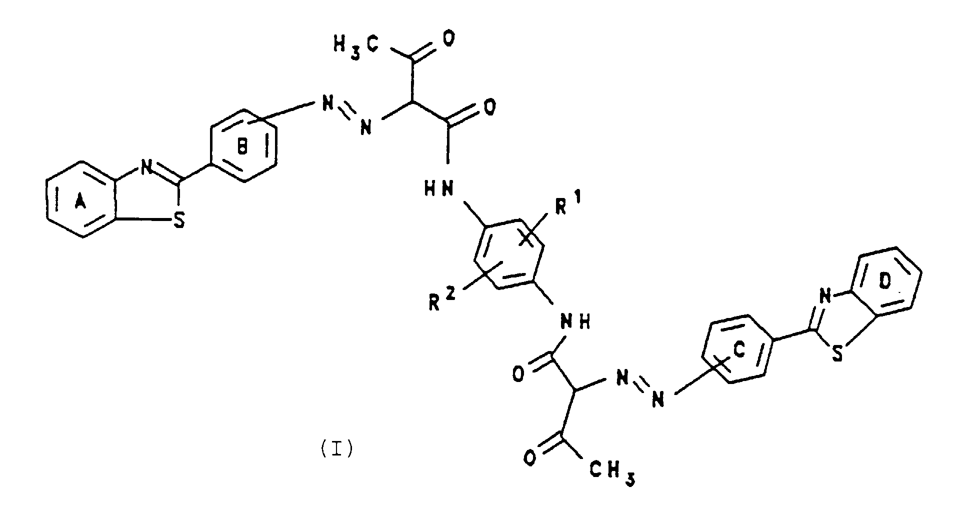 in which R¹ and R² are identical or different and are a hydrogen or halogen atom or a C₁-C₄-alkyl, C₁-C₄-alkoxy, C₁-C₅-alkoxycarbonyl, nitro, cyano or trifluoromethyl group and
the rings A, B, C and D independently of one another are unsubstituted or contain one or more substituents from the group comprising C₁-C₄-alkyl, C₁-C₄-alkoxy, carboxyl, C₁-C₅-carbalkoxy, C₂-C₅-alkanoyl, benzoyl, acyloxy, acylamino, unsubstituted or N-mono- or N,N-disubstituted carbamoyl or unsubstituted or N-mono- or N,N-disubstituted sulfamoyl, possible substituents being C₁-C₄-alkyl or mono- to trisubstituted phenyl; C₁-C₄-alkylamino or phenylamino; C₁-C₄-alkylsulfonyl or phenylsulfonyl; phenylsulfonylamino; cyano; halogen, nitro and trifluoromethyl.

2. A disazo compound as claimed in claim 1, which has the formula (II) 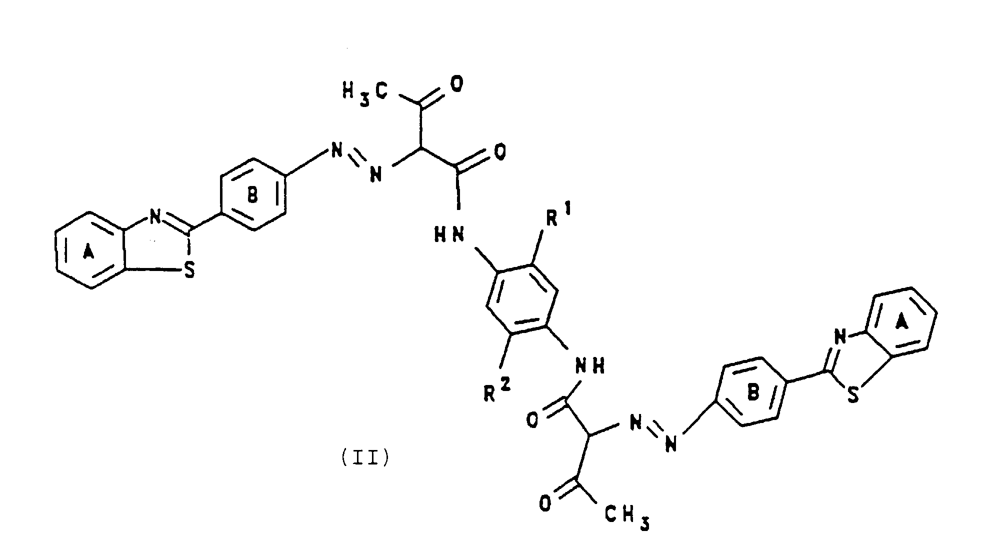 in which R¹ and R² have the meanings given in claim 1 and the rings A and B in each case independently of one another are substituted by one to three radicals corresponding to claim 1.

3. A disazo compound as claimed in claim 2, wherein R¹ and R² are identical or different and are a hydrogen or halogen atom, halogen preferably being chlorine or bromine, C₁-C₄-alkyl, preferably methyl or ethyl, C₁-C₄-alkoxy, preferably methoxy, ethoxy, propoxy or butoxy, nitro, cyano, trifluoromethyl or C₁-C₅-alkoxycarbonyl, preferably methoxycarbonyl or ethoxycarbonyl.

4. A disazo compound as claimed in claim 2, wherein the rings A and B are unsubstituted or independently of one another are substituted by 1 to 3 substituents from the group comprising methyl, ethyl, methoxy, ethoxy, carboxyl, carbomethoxy, carboethoxy, carbopropoxy, carboisopropoxy, carbobutoxy, acetyl, benzoyl, acetoxy, acetylamino, benzoylamino, unsubstituted or N-mono- or N,N-disubstituted carbamoyl, unsubstituted or N-mono- or N,N-disubstituted sulfamoyl, possible substituents being C₁-C₄-alkyl or mono- to trisubstituted phenyl, C₁-C₄-alkylamino, phenylamino, C₁-C₄-alkylsulfonyl, phenylsulfonyl, phenylsulfonylamino, cyano, chlorine, bromine, nitro and trifluoromethyl.

5. A disazo compound as claimed in at least one of claims 1 to 4, which comprises, as the coupling component, the compound 1,4-bis (acetoacetylamino)benzene, 2,5-dimethyl-1,4-bis(acetoacetylamino)benzene, 2-chloro-1,4-bis(acetoacetylamino)benzene, 2,5-dichloro-1,4-bis(acetoacetylamino)benzene, 2-methoxy-5-methyl-1,4-bis(acetoacetylamino)benzene, 2-methyl-1,4-bis(acetoacetylamino)benzene, 2-methoxy-1,4-bis(acetoacetylamino)benzene or 2,5-dimethoxy-1,4-bis(acetoacetylamino)benzene and, as the diazo component, the compound 6-methyl-2-(4-aminophenyl)-benzothiazole, 2-(4-aminophenyl)benzothiazole or 2-(2-amino-5-nitrophenyl)benzothiazole or a combination thereof.

6. A process for the preparation of a disazo compound as claimed in at least one of claims 1 to 5, which comprises diazotizing one or more different, preferably one or two, amines of the formula (III) 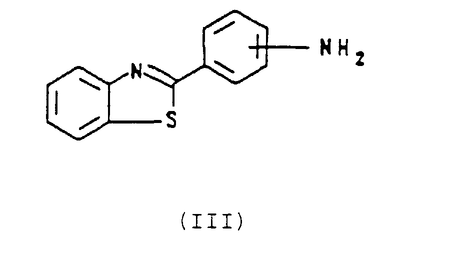 in which the aromatic rings are unsubstituted or are substituted in accordance with formula (I),
and reacting the diazotization product with 0.45 to 0.55 mol, preferably with 0.50 to 0.53 mol, per mole of amine of the formula (III) in total, of one or more different coupling components of the formula (IV)

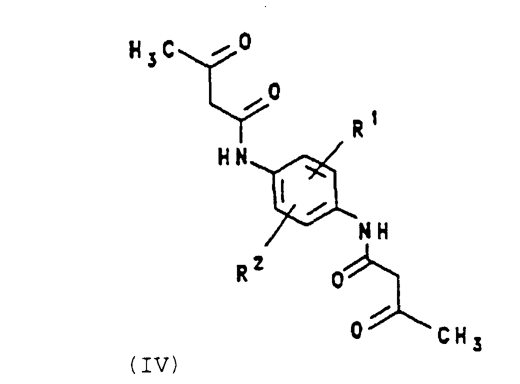

7. The process as claimed in claim 6, wherein an amine of the formula (V) 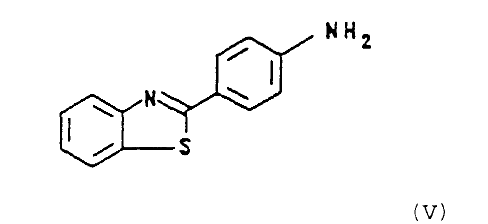 in which the aromatic rings are unsubstituted or are substituted in accordance with formula (II) as claimed in claim 2, is diazotized and the diazotization product is reacted with 0.50 to 0.53 mol, per mole of amine of the formula (V), of a coupling component of the formula (VI)

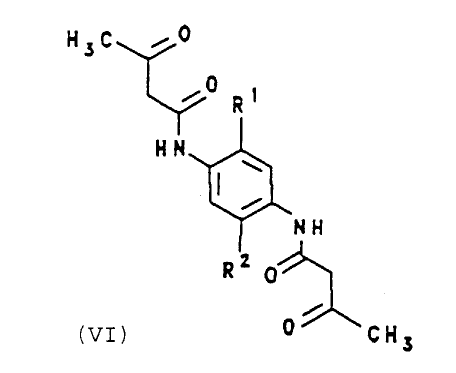

8. A colorant formulation comprising at least one of the disazo compounds as claimed in any one of claims 1 to 5.

9. The use of a disazo compound as claimed in at least one of claims 1 to 5 for coloring naturally occurring and synthetic materials.

10. The use as claimed in claim 9 for pigmenting polystyrene, polyolefins, preferably polyethylene or polypropylene, polyacrylic compounds, polyvinyl compounds, preferably polyvinyl chloride or polyvinyl acetate, polyesters, rubber, casein resins or silicone resins.

11. The use as claimed in claim 9 for the preparation of printing inks and for the formulation of enamels and emulsion paints.

12. The use as claimed in claim 9 for spin coloring artificial silk or for coloring paper.

## Revendications

1. Composé diazoïque de formule (I) 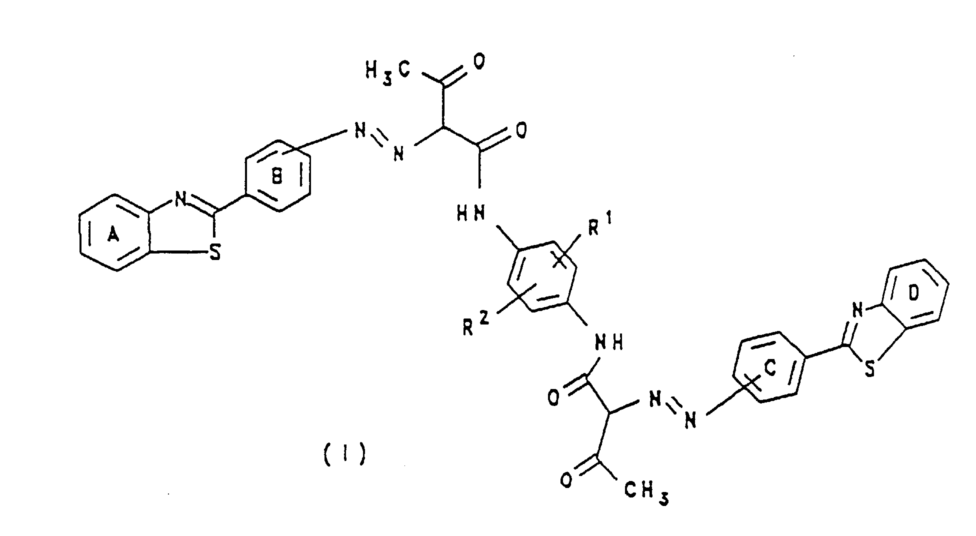 dans laquelle R¹ et R² sont identiques ou différents et représentent un atome d'hydrogène ou d'halogène, un groupe alkyle en C₁-C₄, alcoxy en C₁-C₄, alcoxycarbonyle en C₁-C₅, nitro, cyano ou trifluorométhyle et
les cycles A, B, C et D, indépendamment les uns des autres, sont non substitués ou présentent un ou plusieurs substituants choisis parmi le groupe alkyle en C₁-C₄, alcoxy en C₁-C₄, carboxy, carbalcoxy en C₁-C₅, alcanoyle en C₂-C₅, benzoyle, acyloxy, acylamino, carbamoyle non substitué ou N-mono ou N,N-disubstitué ou sulfamoyle non substitué ou N-mono ou N,N-disubstitué, dans lesquels on considère comme substituants le groupe alkyle en C₁-C₄ ou le groupe phényle substitué une à trois fois; alkylamino en C₁-C₄ ou phénylamino; alkylsulfonyle en C₁-C₄ ou phénylsulfonyle; phénylsulfonylamino; cyano; un atome d'halogène, le groupe nitro et trifluorométhyle.

2. Composé diazoïque selon la revendication 1, caractérisé par la formule (II) 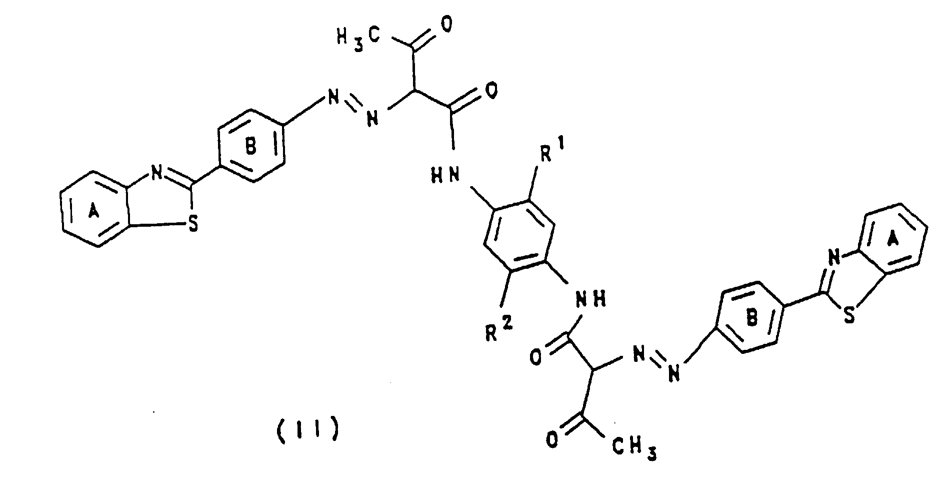 dans laquelle R¹ et R² ont les significations données à la revendication 1 et les cycles A et B, respectivement indépendants l'un de l'autre, sont substitués par un à trois radicaux correspondant à la revendication 1.

3. Composé diazoïque selon la revendication 2, caractérisé en ce que, R¹ et R² sont identiques ou différents et représentent un atome d'hydrogène ou d'halogène, l'atome d'halogène représentant de préférence le chlore ou le brome, un groupe alkyle en C₁-C₄, de préférence méthyle ou éthyle, alcoxy en C₁-C₄, de préférence méthoxy, éthoxy, propoxy ou butoxy, nitro, cyano, trifluorométhyle ou alcoxycarbonyle en C₁-C₅, de préférence méthoxycarbonyle ou éthoxycarbonyle.

4. Composé diazoïque selon la revendication 2, caractérisé en ce que, les cycles A et B sont non substitués ou sont substitués indépendamment l'un de l'autre avec 1 à 3 substituants choisis parmi le groupe méthyle, éthyle, méthoxy, éthoxy, carboxy, carbométhoxy, carboéthoxy, carbopropoxy, carboisopropoxy, carbobutoxy, acétyle, benzoyle, acétoxy, acétylamino, benzoylamino; carbamoyle non substitué ou N-mono ou N,N-disubstitué ou sulfamoyle non substitué ou N-mono ou N,N-disubstitué, dans lesquels on considère comme substituants le groupe alkyle en C1-C4 ou le groupe phényle substitué une à trois fois, alkylamino en C₁-C₄, phénylamino, alkylsulfonyle en C₁-C₄, phénylsulfonyle, phénylsulfonylamino, cyano, un atome de chlore, de brome, un groupe nitro et trifluorométhyle.

5. Composé diazoïque selon au moins une des revendications 1 à 4, caractérisé en ce qu'il contient comme composant de copulation le composé 1,4-bis(acétoacétylamino)benzène, 2,5-diméthyl-1,4-bis (acétoacétylamino)benzène, 2-chloro-1,4-bis (acétoacétylamino)benzène, 2,5-dichloro-1,4-bis (acétoacétylamino)benzène, 2-méthoxy-5-méthyl-1,4-bis (acétoacétylamino)benzène, 2-méthyl-1,4-bis(acétoacétylamino)benzène, 2-méthoxy-1,4-bis (acétoacétylamino)benzène ou 2,5-diméthoxy-1,4-bis (acétoacétylamino)benzène et comme composant diazoïque le composé 6-méthyl-2-(4-aminophényl)benzothiazole, 2-(4-aminophényl)benzothiazole ou 2-(2-amino-5-nitrophényl)benzothiazole ou une combinaison de ceux-ci.

6. Procédé de préparation d'un composé diazoïque selon une au moins des revendications 1 à 5, caractérisé en ce que l'on réalise la diazotation d'une ou plusieurs amines différentes, de préférence une ou deux, de formule générale (III), 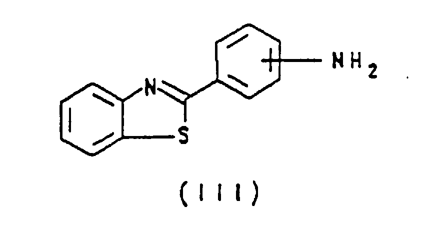 dans laquelle les cycles aromatiques sont non substitués ou substitués selon la formule (I),
et mis à réagir avec 0,45 à 0,55 mol, de préférence avec 0,50 à 0,53 mol, pour 1 mole d'amine de formule (III) au total, d'un ou de plusieurs composants de copulation différents de formule (IV)

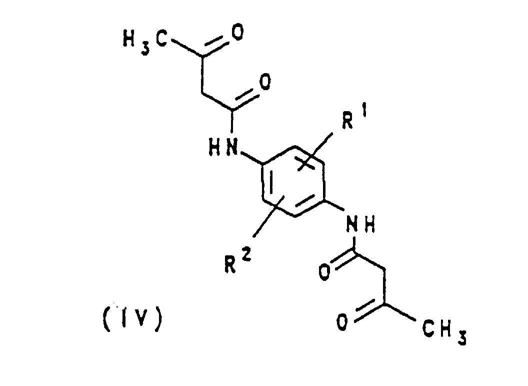

7. Procédé selon la revendication 6, caractérisé en ce qu'on réalise la diazotation d'une amine de formule (V) 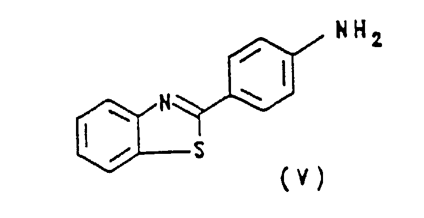 dans laquelle les cycles aromatiques sont non substitués ou substitués de manière correspondante à la formule (II) selon la revendication 2, et mis à réagir avec 0,50 à 0,53 mol, pour une mole d'amine de formule (V), avec un composé de copulation de formule (VI)

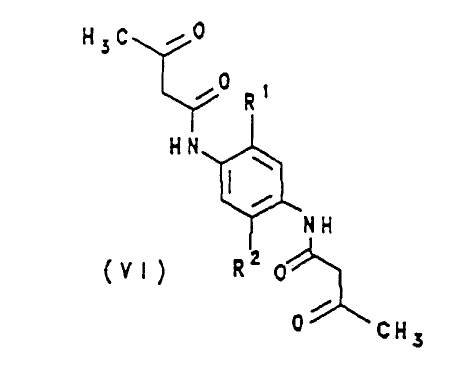

8. Préparation de produit colorant contenant au moins un des composés diazoïques selon l'une des revendications 1 à 5.

9. Utilisation d'un composé diazoïque selon au moins une des revendications 1 à 5 pour la coloration de matériaux naturels et synthétiques.

10. Utilisation selon la revendication 9 pour la pigmentation de polystyrène, de polyoléfines, de préférence de polyéthylène ou de polypropylène, de composés polyacryliques, de composés polyvinyliques, de préférence le polychlorure de vinyle ou le polyacétate de vinyle, de polyesters, de caoutchoucs, de résines de caséine ou de résines silicone.

11. Utilisation selon la revendication 9 pour la préparation de colorants d'impression et pour la préparation de peintures laquées et de peintures à dispersion.

12. Utilisation selon la revendication 9 pour la coloration de soie synthétique dans la masse ou pour la coloration de papier.
